# EUROPÄISCHE PATENTSCHRIFT

(11) **EP 3 186 115 B1**
(45) Veröffentlichungstag und Bekanntmachung des Hinweises auf die Patenterteilung: **24.10.2018**
(21) Anmeldenummer: 15750070.3
(22) Anmeldetag: 14.08.2015
(51) Int. Cl.: B60S 3/06

(54) **FAHRZEUGWASCHANLAGE UND VERFAHREN ZU DEREN BETRIEB**
VEHICLE WASHING INSTALLATION AND METHOD FOR THE OPERATION THEREOF
INSTALLATION DE LAVAGE DE VÉHICULE ET PROCÉDÉ POUR FAIRE FONCTIONNER CELLE-CI

(30) Priorität: 28.08.2014 DE 102014112388
(43) Veröffentlichungstag der Anmeldung: 05.07.2017
(73) Patentinhaber: WashTec Holding GmbH, 86153 Augsburg (DE)
(72) Erfinder: AUER, Robert, 86391 Stadtbergen (DE); HOBMEIER, Christoph, 94436 Simbach (DE); STECHER, David, 86653 Monheim (DE)
(74) Vertreter: Reitstötter Kinzebach
(86) Internationale Anmeldenummer: PCT/EP2015/068789
(87) Internationale Veröffentlichungsnummer: WO 2016/030218

(56) Entgegenhaltungen:
- DE-A1- 19 524 748
- DE-U1- 29 814 758
- JP-A- H0 379 455
- JP-A- H05 213 163
- JP-A- H08 332 921

## Beschreibung

Die Erfindung betrifft eine Fahrzeugwaschanlage nach dem Oberbegriff des Anspruchs 1 sowie ein Verfahren zum Betrieb einer solchen Fahrzeugwaschanlage nach dem Oberbegriff des Anspruchs 10.

Ein bekanntes Problem beim Waschen von Fahrzeugen, insbesondere Automobilen in Fahrzeugwaschanlagen ist es, die oft stark geneigten und gekrümmten Seitenflächen befriedigend zu reinigen. Dieses Problem wurde zunächst dadurch gelöst, dass die hierzu vorgesehenen senkrecht hängenden, drehbaren Seitenwaschbürsten frei pendelnd aufgehängt wurden.

So offenbart die DE 1 936 889 eine Vorrichtung zum Waschen der Seitenflächen eines Fahrzeuges mit frei nach allen Seiten pendelnd am oberen Ende der Waschbürstenachse kardanisch aufgehängten Seitenwaschbürsten. Beim Anfahren der Waschbürste an das Fahrzeug kann die Seitenwaschbürste sich somit an die geneigten Seitenflächen des Fahrzeugs anschmiegen und reinigen. Nachteilig dabei ist, dass die Waschbürste mit ihrem Gewicht auf die Seitenflächen drückt, was stärker geneigte Seitenflächen unerwünscht stark belastet.

Um dieses Aufliegen der Waschbürsten auf den Seitenflächen zu verringern, ist aus dem Stand der Technik bekannt, die Drehachsen der Seitenwaschbürsten aktiv quer zur Längsrichtung zu neigen und in der geneigten Stellung zu halten, um die durch das Gewicht der Seitenwaschbürste erzeugten Kräfte auf die Seitenflächen zu minimieren. Derartige Lösungen sind aus der DE 298 14 758 U1, DE 196 20 684 B4, JP 08-332 921 A, JP 03 079 455 A bekannt.

Diese Ausführungen weisen jedoch den Nachteil auf, dass sie ausschließlich zum Anpassen der Seitenbürsten an geneigte Seitenflächen geeignet sind. In zunehmendem Maße sind aber gerade bei Fahrzeugen mit Schrägheck sowohl die Seitenflächen als auch die Heckflächen immer stärker geneigt. Mit den bekannten Vorrichtungen werden zwar die Seitenflächen in ausreichendem Maß von den schräg gestellten Seitenwaschbürsten gereinigt, und die schrägen Heckflächen können durch die quer zur Längsrichtung verlaufende horizontale Dachwaschbürste gereinigt werden. Gerade in den Übergangsbereichen der schrägen Heckfläche zu den schrägen Seitenflächen ist das Reinigungsergebnis damit aber unbefriedigend.

Um dies zu verbessern, schlägt die DE 10 2007 056 701 B3 vor, eine einzelne Waschbürste an einem langen Auslegerarm anzubringen, der in einer horizontalen Ebene über dem Fahrzeug schwenkbar ist. Am freien Ende des Auslegerarms ist dann eine hängende Waschbürste an einer Gelenkanordnung in einem Winkel von 30° bis 60° frei pendelnd aufgehängt. Hierdurch werden zwar die schrägen Übergangsbereiche gut gereinigt, allerdings besteht auch hier das Problem, dass bei stärkeren Neigungen die Waschbürste mit ihrer Gewichtskraft auf die Fahrzeugseiten- und Heckflächen drückt. Weiter fängt die Waschbürste bei dieser freien Aufhängung leicht zu schwingen an und führt dann unerwünschte Schwenkbewegungen aus, welche das Reinigungsergebnis verschlechtern und das Fahrzeug zusätzlich belasten. Um dies zu verhindern, kann die Schwenkbewegung durch Dämpfer für die Gelenkverbindung und/oder die Waschbürste vorgesehen werden.

Eine entsprechende Ausgestaltung offenbart die US 5 715 558 mit an freien Enden zweier Schwenkarme frei pendelnd aufgehängte Waschbürsten. Auch dort wird die Schwenkbewegung durch Dämpfer abgedämpft, sodass die rotierenden Waschbürsten nicht wild hin und her schwenken können, wenn sie an das Fahrzeug herangeführt werden.

Diese Ausführungen sind aufwendig in der Konstruktion und der Schwenkarm und seine Schwenkgelenke müssen sehr robust ausgeführt sein, um die durch die Drehung und Schwenkbewegung der Waschbürste auftretenden hohen Kräfte aufnehmen zu können.

Aus der gattungsgemäßen JP H05-213163 A ist eine Waschanlage mit einer Seitenwaschbürste bekannt, die um zwei Achsen schwenkbar aufgehängt ist. Ferner sind Stellantriebe vorgesehen, um die Seitenwaschbürste um die Schwenkachsen aktiv zu verstellen.

Des Weiteren ist aus der DE 298 14 758 U1 eine Behandlungsanlage für Fahrzeuge bekannt, bei der sich eine Seitenbürste schräg anstellen lässt.

Des Weiteren ist aus der DE 195 24 748 A1 eine Waschvorrichtung für eine Fahrzeug-Waschstraße bekannt. Die Fahrzeug-Waschstraße umfasst vier Waschbürsten, die im Wesentlichen um vertikale Achsen rotieren. Auch die Bürsten dieser Fahrzeug-Waschstraße sind schwenkbar gelagert.

Schließlich ist aus der JP H6-6136 U eine Fahrzeugwaschanlage bekannt, bei welcher die Waschbürsten so gelagert sind, dass sie in Vorwärts- und Rückwärtsrichtung sowie in seitlichen Richtungen schwingen können. Um die Bürste in seitlicher Richtung schräg zu stellen, ist ein Dreharm vorgesehen, welcher mit einem Rad eines Schlittens zusammenwirkt. Für die Schwenkbewegung in Längsrichtung ist ein Stoßdämpfer vorgesehen.

Aufgabe der vorliegenden Erfindung ist es deshalb, die oben genannten Nachteile zu überwinden und eine Fahrzeugwaschanlage sowie ein Verfahren zu deren Betrieb bereitzustellen, welche ein befriedigendes Waschergebnis auch von schräg geneigten Seitenflächen und Heckflächen des Fahrzeugs ermöglichen, insbesondere auch der Übergänge von Seitenflächen und Heckflächen, der sogenannten C-Säule.

Diese Aufgabe löst die Erfindung durch eine Fahrzeugwaschanlage mit den Merkmalen des Anspruchs 1 sowie ein Verfahren zum Betrieb einer solchen Fahrzeugwaschanlage mit den Merkmalen des Anspruchs 10. Vorteilhafte Ausgestaltungen und zweckmäßige Weiterbildungen der Erfindung sind in den Unteransprüchen angegeben.

Bei der erfindungsgemäßen Fahrzeugwaschanlage weist die Aufhängung einen zweiten Stellantrieb zum Verschwenken der Seitenwaschbürste um die zweite Schwenkachse auf. Hierdurch kann die Neigung der Seitenwaschbürste vorteilhaft auch an die in Längsrichtung geneigten Flächen des Fahrzeugs angepasst werden, und im Zusammenspiel mit der Neigung in Querrichtung können auch ineinander übergehende Übergangsbereiche zwischen quer und längs zur Längsrichtung geneigten Flächen des Fahrzeugs gut gereinigt werden. Zudem kann bei stark geneigten Flächen die Gewichtskraft der Bürsten von den Stellantrieben abgefangen werden, so dass die Waschbürsten nicht zu stark auf diese Flächen des Fahrzeugs aufliegen.

Bevorzugt kann die erste Schwenkachse in eine Längsrichtung der Fahrzeugwaschanlage verlaufen, und/oder die zweite Schwenkachse in eine quer zur Längsrichtung der Fahrzeugwaschanlage verlaufende Querrichtung. Weiter können in einer vorteilhaften Fortbildung die erste Schwenkachse und die zweite Schwenkachse zueinander rechtwinklig verlaufen. Bevorzugt können die erste Schwenkachse bzw. die zweite Schwenkachse auch in einem Bereich von bis zu 20°, bevorzugt bis zu 10° und besonders bevorzugt bis zu einigen Graden von einem exakten parallelen oder rechtwinkligen Verlauf zur Längsrichtung abweichen. Die erste und zweite Schwenkachse können vorteilhaft auch in einem um bis zu 20°, bevorzugt bis zu 10° und besonders bevorzugt bis zu einigen Grad von einem exakten rechtwinkligen Verlauf abweichenden Winkelbereich zueinander verlaufen.

Vorteilhaft können der erste Stellantrieb und/oder der zweite Stellantrieb Linearantriebe sein, beispielsweise Zweistellungszylinder oder beliebige verstellbare Mehrstellungszylinder oder elektrische Linearantriebe.

Erfindungsgemäß weist die Aufhängung eine erste Lagerstütze auf, die um die eine der Schwenkachsen drehbar an einer zweiten Lagerstütze gelagert ist, und die zweite Lagerstütze ist um die andere Schwenkachse drehbar an der Traverse gelagert. Dabei kann bevorzugt einer der Stellantriebe zwischen
erster Lagerstütze und zweiter Lagerstütze und der andere Stellantrieb zwischen zweiter Lagerstütze und der Traverse wirken. Ggf. können die Stellantriebe auch zu einem gemeinsamen Stellantrieb zusammengefasst werden, der die Drehung um beide Schwenkachsen bewirken kann.

Vorteilhaft kann die Aufhängung an einem quer zu einer Längsrichtung der Fahrzeugwaschanlage an einer Traverse verfahrbaren Schlitten angeordnet sein. Bei der Fahrzeugwaschanlage kann es sich vorteilhaft um eine Portalwaschanlage handeln, bei der die Seitenwaschbürsten an einem verfahrbaren Waschportal angeordnet sind, oder um eine Waschstraße, bei dem die Seitenwaschbürsten an einem feststehenden, portalförmigen Rahmen angeordnet sind.

Bevorzugt kann ein Neigungssensor zur Detektion der Neigung der Seitenwaschbürste um die erste Schwenkachse und/oder ein Neigungssensor zur Detektion der Neigung der Seitenwaschbürste um die zweite Schwenkachse vorgesehen sein. Hierdurch kann eine sehr genaue Erfassung der Neigung der betreffenden Schwenkachse und Seitenwaschbürste durchgeführt werden.

Bevorzugt können die erste Schwenkachse und die zweite Schwenkachse im wesentlichen horizontal verlaufen. Hierdurch kann die Lagerung der Waschbürste bei ausreichender Stabilität weiter vereinfacht werden. Weiter kann die Seitenwaschbürste nach unten frei hängend angeordnet sein, wodurch die Beweglichkeit der Waschbürste weiter verbessert werden kann.

Ein Verfahren zum Betrieb einer Fahrzeugwaschanlage, insbesondere wie oben und nachfolgend beschrieben, mit mindestens einer Seitenwaschbürste, die um eine erste Schwenkachse und eine dazu unterschiedliche, quer zu einer Längsrichtung der Fahrzeugwaschanlage verlaufende zweite Schwenkachse drehbar an der Fahrzeugwaschanlage gelagert ist, wobei ein Stellantrieb zum Verschwenken der Seitenwaschbürste um die zweite Schwenkachse vorgesehen ist, weist erfindungsgemäß die folgenden Schritte auf: a) Detektieren und/oder Bestimmen der Neigung einer quer zur Längsrichtung verlaufenden ersten Fahrzeugfläche, b) Verschwenken der Seitenwaschbürste aus einer Grundstellung um die zweite Schwenkachse entsprechend der Neigung der ersten Fahrzeugfläche, und c) Bewegen der Seitenwaschbürste entlang der ersten Fahrzeugfläche zum Reinigen der ersten Fahrzeugfläche.

Vorteilhaft kann die Neigung mindestens einer sich an die erste Fahrzeugfläche anschließenden zweiten Fahrzeugfläche detektiert werden, und die Seitenwaschbürste mittels eines weiteren Stellantriebs um die erste Schwenkachse entsprechend der Neigung der zweiten Fahrzeugfläche verschwenkt werden, wenn in Schritt c) ein Übergangsbereich zwischen der ersten Fahrzeugfläche und der zweiten Fahrzeugfläche erreicht wird. Vorteilhaft kann dabei das Verschwenken der Seitenwaschbürste um die erste Schwenkachse während Schritt c) blockiert werden, um ein übermäßiges Pendeln der Seitenwaschbürste in Querrichtung zu verringern. Bevorzugt kann die Seitenwaschbürste zum Waschen der zweiten Fahrzeugfläche in die Grundstellung zurückgeschwenkt und dort gegen ein Verschwenken um die zweite Schwenkachse blockiert werden, so dass ein übermäßiges Pendeln in Längsrichtung vermieden wird.

Weitere Besonderheiten und Vorzüge der Erfindung ergeben sich aus der folgenden detaillierten Beschreibung bevorzugter Ausführungsbeispiele anhand der Zeichnungen. Es zeigen:
- **Fig. 1**: eine schematische Seitenansicht einer erfindungsgemäßen Fahrzeugwaschanlage in einer ersten Stellung;
- **Fig. 2**: die Seitenansicht der Fahrzeugwaschanlage aus Fig. 1 in einer zweiten Stellung;
- **Fig. 3**: eine schematische Draufsicht auf die Fahrzeugwaschanlage aus Fig. 1 in der ersten Stellung;
- **Fig. 4**: die Draufsicht aus Fig. 3 mit der Fahrzeugwaschanlage in der zweiten Stellung aus Fig. 2;
- **Fig. 5**: die Draufsicht aus Fig. 3 mit der Fahrzeugwaschanlage in einer dritten Stellung;
- **Fig. 6**: eine schematische dreidimensionale Ansicht einer Seitenwaschbürste-Aufhängung der Fahrzeugwaschanlage aus Fig. 1.

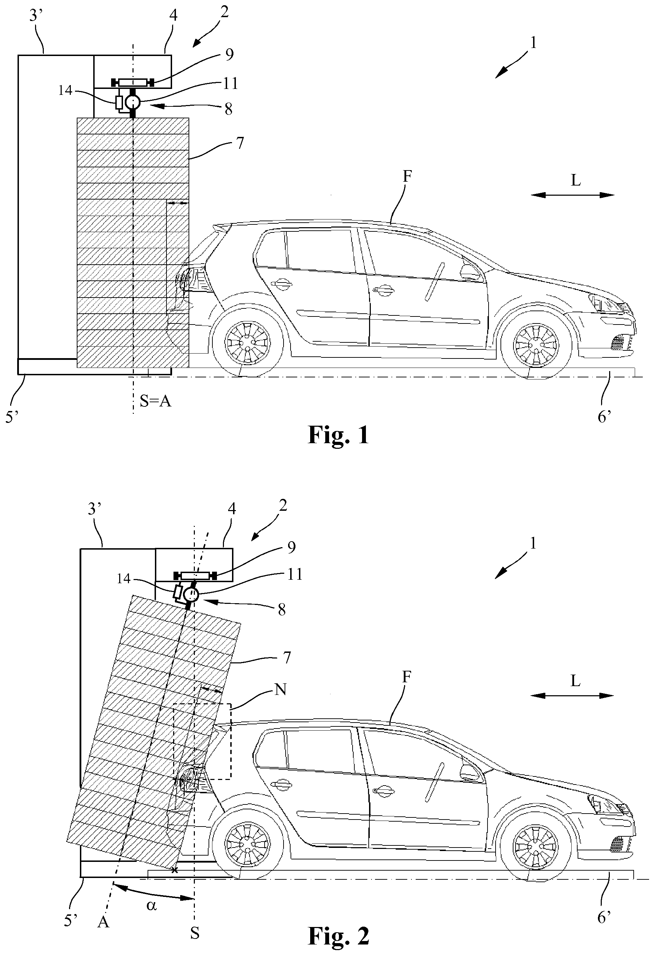

Fig. 1 bis 5 zeigen eine erfindungsgemäße Fahrzeugwaschanlage in Form einer schematisch dargestellten Portalwaschanlage 1 mit einem Waschportal 2. Das Waschportal 2 weist zwei im Wesentlichen senkrecht stehende Portalsäulen 3, 3' auf, die durch eine Portaltraverse 4 miteinander verbunden sind. Am unteren Ende der Portalsäulen 3, 3' sind Fahrfüße 5, 5' vorgesehen, mit denen das Waschportal 2 auf Fahrschienen 6, 6' in einer Längsrichtung L der Waschanlage 1 verfahrbar ist. Am Waschportal 2 sind vertikale Seitenwaschbürsten 7, 7', im weiteren auch einfach nur als Waschbürsten 7, 7' bezeichnet, und eine nicht gezeichnete horizontale Dachwaschbürste angeordnet. Diese Ausbildung der Portalwaschanlage 1 ist an sich bekannt und bedarf deshalb keiner weiteren Erläuterung.

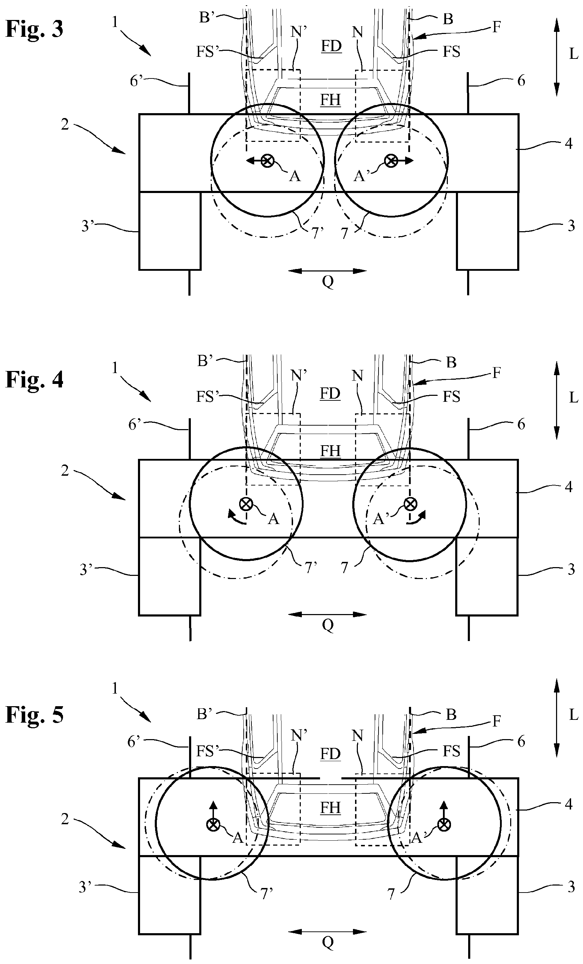

Da die Portalwaschanlage 1 bezüglich ihrer in Längsrichtung L verlaufenden Längsmittelachse symmetrisch ausgebildet ist, wird die Erfindung im nachfolgenden vor allem anhand der in Fig. 3 bis 5 rechten Seite erläutert, entsprechende Ausführungen gelten entsprechend auch für die linke Seite. Für die Bauteile der linken Seite werden deshalb die mit einem Apostroph versehenen Bezugszeichen der entsprechenden Bauteile der rechten Seite verwendet. Dabei ist zur besseren Erläuterung der Erfindung in Fig. 1 und 2 lediglich der in Fig. 3 bis 5 linke Teil des Waschportals 2 mit der rechten Waschbürste 7 gezeigt.

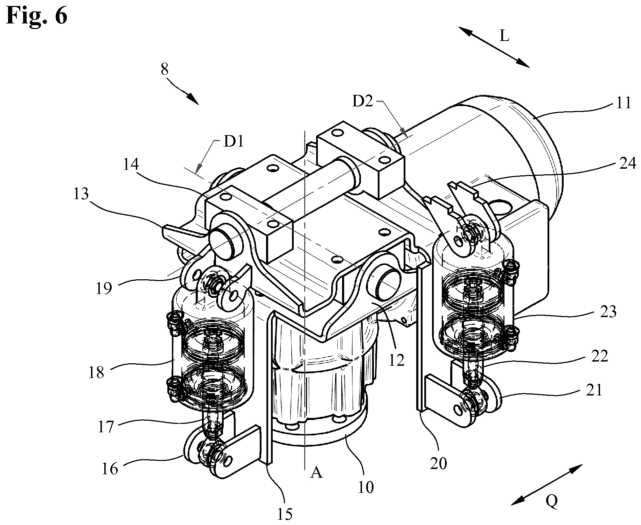

Erfindungsgemäß ist die Waschbürste 7 dabei über eine in Fig. 1 und 2 angedeutete, in Fig. 6 im Detail gezeigte Aufhängung 8 an einem in Fig. 1 und 2 schematisch angedeuteten Schlitten 9 aufgehängt. Der Schlitten 9 ist an der Portaltraverse 4 in einer zur Längsrichtung L quer verlaufenden Querrichtung Q verfahrbar.

Die Waschbürste 7 ist an einer Bürstenhalterung 10 der Aufhängung angeordnet. Die Bürstenhalterung 10 kann zusammen mit der Waschbürste 7 durch einen Antriebsmotor 11 über ein nicht gezeichnetes Getriebe um eine Drehachse A der Waschbürste 7 gedreht werden. Die Drehachse A und somit die Waschbürste 7 befinden sich dabei vor Beginn der Reinigung in der in Fig. 1 gezeigten senkrechten, unausgelenkten Grundstellung S.

Die Bürstenhaltung 10 und der Antriebsmotor 11 sind hierzu an einer ersten Lagerstütze 12 angeordnet, die ihrerseits um eine in Längsrichtung L verlaufende horizontale erste Schwenkachse D1 an einer zweiten Lagerstütze 13 angeordnet sind. Die zweite Lagerstütze 13 ist ihrerseits über Lagerblöcke 14 um eine in Querrichtung Q verlaufende horizontale zweite Schwenkachse D2 an dem Fahrschlitten 9 angeordnet. Die Waschbürste 7 ist somit ähnlich einem Kardangelenk in Längsrichtung L und Querrichtung Q frei pendelnd gelagert.

Um die Waschbürste 7 an den Übergang zwischen schrägen Seitenflächen FS und schräger Heckfläche FH eines Fahrzeugs F in ihrer Neigung aktiv anpassen zu können, weist die erste Lagerstütze 12 einen weitgehend rechtwinklig abstehenden Lagersteg 15 auf. An seinem vorderen Ende weist der erste Lagersteg 15 Lagerflansche 16 für die drehbare Befestigung einer Kolbenstange 17 eines ersten Stellzylinders 18 auf. Der erste Stellzylinder 18 selbst ist über Lagerflansche 19 drehbar an der zweiten Lagerstütze 13 gelagert. Durch den ersten Stellzylinder 18 kann somit die erste Lagerstütze 12 und folglich auch die Waschbürste 7 um die erste Schwenkachse D1 in Querrichtung Q schräg angestellt werden.

Um die Waschbürste 7 aktiv um einen Neigungswinkel α um die zweite Schwenkachse D2 in Längsrichtung L schwenken zu können, weist die zweite Lagerstütze 13 ebenfalls einen im Wesentlichen rechtwinklig davon abstehenden zweiten Lagersteg 20 auf. Der Lagersteg 20 trägt an seinem freien Ende Lagerflansche 21, an denen eine Kolbenstange 22 eines zweiten Stellzylinders 23 drehbar angelenkt ist. Der zweite Stellzylinder 23 ist seinerseits über Lagerflansche 24 drehbar an dem Fahrschlitten 9 angelenkt. Mit dem zweiten Stellzylinder 23 kann somit die zweite Lagerstütze 13 und folglich die Waschbürste 7 um die Schwenkachse D2 in Längsrichtung L geschwenkt werden. Die Waschbürste 7 kann dabei in Längsrichtung L vor und zurück geneigt werden. Ggf. kann in einer einfacheren Ausführung die Neigung dabei auch nur in die in Fig. 2 gezeigte Richtung erfolgen.

Vorzugsweise handelt es sich bei den Stellzylindern 18 und 23 um Pneumatik- oder Hydraulikzylinder, welche mindestens in eine Richtung wirken können, um die Drehachse A der Waschbürste 7 aus der in Fig. 1 gezeigten hängenden senkrechten Stellung S in die gewünschte schräge Stellung anzustellen, wie in Fig. 2 gezeigt. Die Rückbewegung von der geneigten Stellung kann bei derartigen einfach wirkenden Zylindern schwerkraftbewirkt erfolgen. Ggf. können zur schnelleren und definierten Einstellung der Schräge der Waschbürste auch doppelt wirkende Zylinder verwendet werden. Ggf. können auch andere Antriebe vorgesehen werden, um die Waschbürste 7 zu schwenken, beispielsweise elektrische Linearantriebe.

Somit kann die Waschbürste 7 sowohl an die schräg geneigte Heckfläche FH als auch an die schräg geneigte Seitenfläche FS des Fahrzeugs angepasst werden, wobei hierdurch dann auch die stark geneigten Übergangsflächen zwischen Heckfläche FH und Seitenfläche FS gut erreichbar sind.

Der Neigungsgrad der Seitenflächen FS, FS' und der Heckfläche FH kann durch eine an sich bekannte, vorher oder während einer ersten Überfahrt des Waschportals 2 über das Fahrzeug F erfolgte Konturerfassung bestimmt werden, um die Stellzylinder 18, 23 entsprechend ansteuern zu können. Die Konturerfassung kann dabei u. a. mittels Lichtschranken, Bildbearbeitungsmitteln etc erfolgen. Auch kann beispielsweise die Neigung der Heckfläche FH dadurch bestimmt werden, dass beim Waschen des Fahrzeugs F mit der Dachwaschbürste die Übergänge zwischen Dachfläche und Heckfläche FH sowie Heckfläche FH und dem Ende des Fahrzeugs sowie die zugehörigen Höhen der Dachwaschbürste miteinander in Beziehung gesetzt werden. Entsprechend kann die Neigung der Seitenflächen FS, FS' beim Reinigen mit den Waschbürsten 7, 7', beginnend an der Front des Fahrzeugs F bestimmt werden.

In einer vorteilhaften Ausbildung der Erfindung können die Neigungen der Seitenflächen FS, FS' und der Heckfläche FH auch durch Winkelsensoren erkannte werden, die die Auslenkung der Drehachse A der Waschbürste 7 aus ihrer Grundstellung um die Schwenkachsen D1 und D2 erfassen. Bevorzugt kann dabei ein Winkelsensor zwischen der ersten Lagerstütze 12 und der zweiten Lagerstütze 13 zur Bestimmung der Neigung um die Schwenkachse D1 und ein weiterer Winkelsensor zwischen der zweiten Lagerstütze 13 und dem Fahrschlitten 9 zur Bestimmung der Neigung um die Schwenkachse D2 vorgesehen werden.

Die entsprechenden Werte können dann in an sich bekannter Weise in der Steuerung der Portalwaschanlage 1 gespeichert und zu deren Steuerung herangezogen werden.

Die aktive Verschwenkung der Waschbürsten 7, 7' mittels der Aufhängung 8 wird nachfolgend anhand von Fig. 1 bis 5 erläutert. Soweit möglich, erfolgt dies vor allem anhand der rechten Waschbürste 7, entsprechende Ausführungen gelten auch für die linke Waschbürste 7'.

Vor der in Fig. 3 gezeigten Stellung der Waschbürsten 7, 7' wurden schon die Dachfläche FD und die Heckfläche FH des Fahrzeugs F mit der nicht gezeigten Dachwaschbürste und die Seitenflächen FS, FS', beginnend an der Front des Fahrzeugs F, gereinigt und dann die Waschbürsten 7, 7' um das Fahrzeugheck herum in die in Fig. 3 gezeigte mittige Ausgangsposition bewegt.

Von der mittigen Ausgangsposition in Fig. 3 Reinigen die Waschbürsten 7, 7' dann zunächst die Heckflächen FH des Fahrzeugs F beginnend von der Fahrzeugmitte zu den Seitenflächen FS, FS' des Fahrzeugs F hin. Dabei sind die Waschbürsten 7, 7' in Längsrichtung L, also um die Schwenkachse D2 um ca. 15° aktiv durch den Stellzylinder 23 um die Schwenkachse D2 geschwenkt, um die entsprechend schräg geneigte Heckfläche FH sauber waschen zu können. Die Schrägstellung der Drehachse A ist in Fig. 3 bis 5 durch die strichpunktierten Linien angedeutet, welche die Position der unteren Enden der Waschbürsten 7, 7' zeigen, während die Position der oberen Enden der Waschbürsten 7, 7' durch die durchgezogenen Linien angezeigt ist.

In Querrichtung Q hingegen wird die Waschbürste 7 senkrecht gehalten, die Drehachse A der Waschbürste 7 also durch den ersten Zylinder 18 fixiert.

Sobald anhand der Daten der Konturerfassung festgestellt wird, dass die Waschbürsten 7, 7' in den Bereich der geneigten Seitenflächen FS, FS' des Fahrzeugs F gelangen, werden die Waschbürsten 7, 7' in Querrichtung Q nach außen geschwenkt. Dies ist in Fig. 4 dadurch angedeutet, dass die Drehachsen A, A' der Waschbürsten 7, 7' gedachte, in der Steuerung aus den Konturdaten ermittelte Begrenzungslinien B, B' nach außen hin überschreiten. Der Neigungswinkel der Drehachse A in Querrichtung Q entspricht dabei bevorzugt der Neigung der Seitenflächen FS, FS' im Bereich der C-Säule, so dass diese schrägen Übergangsbereiche N, N' gut gereinigt werden. Hier beträgt der Neigungswinkel in Querrichtung Q rund 5°.

Bevorzugt wird dabei die Drehachse A nicht abrupt geschwenkt, sondern an die Kontur des Fahrzeugs F angepasst ausgeführt. Hierzu können die durch die Konturerfassung ermittelten Fahrzeugdaten verwendet werden, um den Neigungswinkel in beiden Richtungen möglichst gut und bevorzugt kontinuierlich an die Neigung der Heckfläche FH und der Seitenflächen FH, FS, FS' anzupassen. Hierzu sind die Stellzylinder 18, 23 bevorzugt als Mehrstellungszylinder ausgebildet, so dass jeder Neigungswinkel einstellbar ist. Mit Anpassen ist dabei nicht gemeint, dass der Neigungswinkel der Drehachsen A, A' der Waschbürsten 7, 7' exakt mit den Neigungswinkeln der Seitenflächen FS, FS' oder der Heckfläche FH übereinstimmt, sondern dass eine ungefähre Anpassung mit einer gewissen Toleranz stattfindet, da die Übergangsbereiche N, N' oft keinen über die gesamte Höhe des Fahrzeugs gleichbleibenden Winkel aufweisen.

Wie in Fig. 4 durch die gebogenen Pfeile angedeutet, vollführen die Waschbürsten 7, 7' dabei einen Weg entlang der Übergangsbereiche N, N' zwischen Heckfläche FH und Seitenflächen FS, FS'.

Ist die Heckfläche FH einschließlich der Übergangsbereiche N, N' zwischen der Heckfläche FH und den Seitenflächen FS, FS' gereinigt, werden die Waschbürsten 7, 7' in Längsrichtung L in ihre Grundstellung S zurückgeschwenkt, und hängen somit senkrecht nach unten, wie in Fig. 5 gezeigt. In Querrichtung bleiben die Waschbürsten 7, 7' unverändert geneigt, um die schrägen Seitenflächen FS, FS' beim nachfolgenden Überfahren des Fahrzeugs F reinigen zu können.

Das oben beschriebene Verfahren ist vor allem bei Fahrzeugen F mit großer Neigung der Seitenflächen FS, FS' sinnvoll, um zu vermeiden, dass die Gewichtskraft der Waschbürsten 7, 7' auf die Seitenfläche FS, FS' wirkt, wenn die Waschbürsten 7, 7' in Querrichtung Q frei beweglich wären.

In einer vorteilhaften alternativen Ausführung können die Waschbürsten 7, 7' beim Übergang von der in Fig. 3 gezeigten Stellung zu der in Fig. 4 gezeigten Stellung bei in Längsrichtung L aktiv geschwenkter Waschbürste 7, 7' in Querrichtung Q nicht durch den Stellzylinder 18 aktiv geschwenkt werden, sondern der Stellzylinder 18 freigeschaltet werden, sodass die Waschbürsten 7, 7' in Querrichtung Q frei pendeln können. Dies geschieht wieder, sobald die Waschbürsten 7, 7' beim Verfahren in Querrichtung Q den zuvor festgestellten Bereich der Fahrzeugseiten FS bzw FS' erreichen, also wenn die Drehachsen A, A' die Begrenzungslinien B, B' nach außen hin überschreiten. Dadurch kann sich die Neigung der Drehachse A der Neigung der Seitenflächen FS, FS' in den Übergangsbereichen N, N' der C-Säule anpassen, sodass die Waschbürsten 7, 7' sich gut an diese zweifach geneigten Übergangsbereiche anschmiegen und diese reinigen. Hier beträgt der Neigungswinkel in Querrichtung Q ca. 3° bis 8°. Die Waschbürsten 7, 7' verfahren dann nicht mehr weiter nach außen als bis zu der vorher über die Konturerfassung bestimmten seitlichen Ausdehnung der Fahrzeugseiten FS bzw. FS'.

Dies ist bei Fahrzeugen F mit kleinerer Neigung der Seitenflächen FS, FS' sinnvoll, da hier die Waschbürsten 7, 7' in Querrichtung Q sehr steil stehen und somit nur eine relativ geringe Gewichtskraft auf die Seitenflächen FS, FS' wirkt. Überschreitet die Neigung der Seitenflächen FS, FS' jedoch einen vorgegebenen Wert, beispielsweise 10°, so werden die Waschbürsten 7, 7' automatisch durch den ersten Stellzylinder 18 in der geneigten Stellung mit entsprechendem Winkel festgestellt, um die Gewichtskraft von den Seitenflächen FS, FS' zu nehmen.

In einer alternativen Ausführung kann einer oder auch beide Stellantriebe 18, 23 auch nur als Zweistellungszylinder ausgeführt sein, wobei dann keine möglichst winkeltreue und ggf. sich ständige anpassende Neigung der Drehachsen A, A' der Waschbürsten 7, 7' eingestellt wird, sondern entweder die Grundstellung oder die durch den Zweistellungszylinder vorgegebene Neigung, beispielsweise 15°.

Hierdurch lassen sich zum einen Kosten für die Stellantriebe und die Konturerfassung reduzieren, zum anderen lässt sich der steuerungstechnische Aufwand reduzieren. Denn dann muss nicht ständig der Neigungswinkel der Drehachsen A, A', ggf. um die zwei Schwenkachsen D1, D2, nachgeführt werden, sondern bei Erreichen der Übergangsbereiche N, N' bzw. dem Beginn der Neigung der Seitenflächen FS, FS' bzw. der Heckfläche FH wird die Drehachse A, A' durch den jeweilige Stellantrieb 18, 23 in die einzige geneigte Stellung gebracht. Diese Vereinfachung ist natürlich auch mit den oben beschriebenen Mehrstellungszylindern möglich. Bei diesen können vorteilhaft beispielsweise auch nur drei Stellungen (Grundstellung, schwach geneigt und stark geneigt) realisieren, um ebenfalls den steuerungstechnischen Aufwand zu reduzieren.

### Bezugszeichenliste

- 1: Portalwaschanlage (Fahrzeugbehandlungsanlage)
- 2: Waschportal
- 3, 3': Portalsäulen
- 4: Portaltraverse
- 5, 5': Fahrfüße
- 6, 6': Fahrschienen
- 7, 7': Seitenwaschbürsten
- 8: Aufhängung Seitenwaschbürste
- 9: Fahrschlitten
- 10: Bürstenhalterung
- 11: Antriebsmotor Waschbürste
- 12: erste Lagerstütze
- 13: zweite Lagerstütze
- 14: Lagerblöcke
- 15: erster Lagersteg
- 16: Lagerflansche
- 17: Kolbenstange erster Zylinder
- 18: erster Stellzylinder
- 19: Lagerflansche
- 20: zweiter Lagersteg
- 21: Lagerflansche
- 22: Kolbenstange zweiter Zylinder
- 23: zweiter Stellzylinder
- 24: Lagerflansche

- A, A': Drehachse Waschbürste
- S: Stellung der frei hängenden Waschbürstendrehachse
- B, B': seitliche Begrenzungslinien
- D1: Drehachse Aufhängung in Querrichtung
- D2: Drehachse Aufhängung in Längsrichtung
- F: Fahrzeug
- FD: Fahrzeugdachfläche
- FH: Fahrzeugheckfläche
- FS, FS': Fahrzeugseitenflächen
- N, N': Übergangsbereiche des Fahrzeughecks
- L: Längsrichtung der Portalwaschanlage
- Q: Querrichtung
- α: Neigungswinkel in Längsrichtung

## Patentansprüche

1. Fahrzeugwaschanlage (1) mit mindestens einer Seitenwaschbürste (7, 7'), die mittels einer Aufhängung (8) um eine erste Schwenkachse (D1) und eine davon unterschiedliche zweite Schwenkachse (D2) drehbar an einer Traverse (4) der Fahrzeugwaschanlage (1) gelagert ist, wobei die Aufhängung (8) einen ersten Stellantrieb (18) zum Verschwenken der Seitenwaschbürste (7, 7') um die erste Schwenkachse (D1) und einen zweiten Stellantrieb (23) zum Verschwenken der Seitenwaschbürste (7, 7') um die zweite Schwenkachse (D2) aufweist, **dadurch gekennzeichnet, dass** die Aufhängung (8) eine erste Lagerstütze (12) aufweist, die um die eine der Schwenkachsen (D1) drehbar an einer zweiten Lagerstütze (13) gelagert ist, und die zweite Lagerstütze (13) um die andere Schwenkachse (D2) drehbar an der Traverse (4) gelagert ist.

2. Fahrzeugwaschanlage (1) nach Anspruch 1, **dadurch gekennzeichnet, dass** die erste Schwenkachse (D1) in eine Längsrichtung (L) der Fahrzeugwaschanlage (1) verläuft.

3. Fahrzeugwaschanlage (1) nach Anspruch 1 oder 2, **dadurch gekennzeichnet, dass** die zweite Schwenkachse (D2) in eine quer zur Längsrichtung (L) der Fahrzeugwaschanlage (1) verlaufende Querrichtung (Q) verläuft.

4. Fahrzeugwaschanlage (1) nach einem der voranstehenden Ansprüche, **dadurch gekennzeichnet, dass** der erste Stellantrieb (18) und/oder der zweite Stellantrieb (23) Linearantriebe sind.

5. Fahrzeugwaschanlage (1) nach einem der Ansprüche 1 bis 3, **dadurch gekennzeichnet, dass** der erste Stellantrieb (18) und/oder der zweite Stellantrieb (23) Zweistellungszylinder oder verstellbare Mehrstellungszylinder sind, die als Pneumatikzylinder ausgebildet sind.

6. Fahrzeugwaschanlage (1) nach einem der voranstehenden Ansprüche, **dadurch gekennzeichnet, dass** einer der Stellantriebe (18) zwischen erster Lagerstütze (12) und zweiter Lagerstütze (13) und der andere Stellantrieb (23) zwischen zweiter Lagerstütze (13) und der Traverse (4) wirkt.

7. Fahrzeugwaschanlage (1) nach einem der voranstehenden Ansprüche, **dadurch gekennzeichnet, dass** ein Neigungssensor zur Detektion der Neigung der Seitenwaschbürste (7, 7') um die erste Schwenkachse (D1) und/oder ein Neigungssensor zur Detektion der Neigung der Seitenwaschbürste (7, 7') um die zweite Schwenkachse (D2) vorgesehen ist.

8. Fahrzeugwaschanlage (1) nach einem der voranstehenden Ansprüche, **dadurch gekennzeichnet, dass** die Aufhängung (8) an einem quer zu einer Längsrichtung (L) der Fahrzeugwaschanlage (1) an einer Traverse (4) verfahrbaren Schlitten (9) angeordnet ist.

9. Fahrzeugwaschanlage (1) nach einem der voranstehenden Ansprüche, **dadurch gekennzeichnet, dass** die erste Schwenkachse (D1) und die zweite Schwenkachse (D2) im Wesentlichen horizontal verlaufen.

10. Verfahren zum Betrieb einer Fahrzeugwaschanlage mit mindestens einer Seitenwaschbürste (7, 7'), die um eine erste Schwenkachse (D1) und eine dazu unterschiedliche, quer zu einer Längsrichtung (L) der Fahrzeugwaschanlage (1) verlaufende zweite Schwenkachse (D2) drehbar an der Fahrzeugwaschanlage (1) gelagert ist, wobei ein Stellantrieb (23) zum Verschwenken der Seitenwaschbürste (7, 7') um die zweite Schwenkachse (D2) vorgesehen ist, **gekennzeichnet durch** die Schritte:
a) Detektieren und/oder Bestimmen der Neigung einer quer zur Längsrichtung (L) verlaufenden ersten Fahrzeugfläche (FH),
b) Verschwenken der Seitenwaschbürste (7, 7') aus einer Grundstellung (S) um die zweite Schwenkachse (D2) entsprechend der Neigung der ersten Fahrzeugfläche (FH),
c) Bewegen der Seitenwaschbürste (7, 7') entlang der ersten Fahrzeugfläche (FH) zum Reinigen der ersten Fahrzeugfläche (FH)
d) Detektieren der Neigung mindestens einer sich an die erste Fahrzeugfläche (FH) anschließenden zweiten Fahrzeugfläche (FS, FS'),
e) Verschwenken der Seitenwaschbürste (7, 7') mittels eines weiteren Stellantriebs (18) um die erste Schwenkachse (D1) entsprechend der Neigung der zweiten Fahrzeugfläche (FS, FS'), wenn in Schritt c) ein Übergangsbereich (N, N') zwischen der ersten Fahrzeugfläche (FH) und der zweiten Fahrzeugfläche (FS, FS') erreicht wird.

11. Verfahren nach Anspruch 10, **dadurch gekennzeichnet, dass** das Verschwenken der Seitenwaschbürste (7, 7') um die erste Schwenkachse (D1) während Schritt c) blockiert wird.

12. Verfahren nach einem der Ansprüche 10 oder 11, **dadurch gekennzeichnet, dass** die Seitenwaschbürste (7, 7') zum Waschen der zweiten Fahrzeugfläche (FS, FS') in die Grundstellung (S) zurückgeschwenkt und dort gegen ein Verschwenken um die zweite Schwenkachse (D2) blockiert wird.

13. Verfahren nach einem der Ansprüche 10 bis 12, **dadurch gekennzeichnet, dass** der Stellantrieb (23) und/oder der weiter Stellantrieb (18) einen Stellzylinder umfasst, der als Pneumatikzylinder ausgebildet ist, welcher mindestens in eine Richtung wirkt, um eine Drehachse (A) der Seitenwaschbürste (7, 7') aus der Grundstellung (S), die senkrecht ausgerichtet ist, in eine schräge Stellung anzustellen.

14. Verfahren nach einem der Ansprüche 10 bis 13, **dadurch gekennzeichnet, dass** die Fahrzeugwaschanlage (1) nach einem der Ansprüche 1 bis 9 ausgebildet ist.

## Claims

1. A vehicle washing installation (1) with at least one side washing brush (7, 7') which is mounted on a crossmember (4) of the vehicle washing installation (1) by means of a suspension (8) so as to be rotatable about a first pivot axis (D1) and a second pivot axis (D2) which differs therefrom, wherein the suspension (8) has a first actuating drive (18) for pivoting the side washing brush (7, 7') about the first pivot axis (D1) and a second actuating drive (23) for pivoting the side washing brush (7, 7') about the second pivot axis (D2), **characterized in that** the suspension (8) has a first bearing support (12) which is mounted on a second bearing support (13) so as to be rotatable about one of the pivot axes (D1), and the second bearing support (13) is mounted on the crossmember (4) so as to be rotatable about the other pivot axis (D2).

2. The vehicle washing installation (1) as claimed in claim 1, **characterized in that** the first pivot axis (D1) runs in a longitudinal direction (L) of the vehicle washing installation (1).

3. The vehicle washing installation (1) as claimed in claim 1 or 2, **characterized in that** the second pivot axis (D2) runs in a transverse direction (Q) running transversely with respect to the longitudinal direction (L) of the vehicle washing installation (1).

4. The vehicle washing installation (1) as claimed in any one of the preceding claims, **characterized in that** the first actuating drive (18) and/or the second actuating drive (23) are linear drives.

5. The vehicle washing installation (1) as claimed in either of claims 1 to 3, **characterized in that** the first actuating drive (18) and/or the second actuating drive (23) two position cylinders or adjustable multiposition cylinders that are adapted as pneumatic cylinders.

6. The vehicle washing installation (1) as claimed in any one of the preceding claims, **characterized in that** one of the actuating drives (18) acts between the first bearing support (12) and the second bearing support (13) and the other actuating drive (23) acts between the second bearing support (13) and the crossmember (4).

7. The vehicle washing installation (1) as claimed in any one of the preceding claims, **characterized in that** an inclination sensor is provided for detecting the inclination of the side washing brush (7, 7') about the first pivot axis (D1) and/or an inclination sensor is provided for detecting the inclination of the side washing brush (7, 7') about the second pivot axis (D2).

8. The vehicle washing installation (1) as claimed in any one of the preceding claims, **characterized in that** the suspension (8) is arranged on a carriage (9) which is movable on a crossmember (4) transversely with respect to a longitudinal direction (L) of the vehicle washing installation (1) .

9. The vehicle washing installation (1) as claimed in any one of the preceding claims, **characterized in that** the first pivot axis (D1) and the second pivot axis (D2) run substantially horizontally.

10. A method for the operation of a vehicle washing installation with at least one side washing brush (7, 7') which is mounted on the vehicle washing installation (1) so as to be rotatable about a first pivot axis (D1) and a second pivot axis (D2) which differs therefrom and runs transversely with respect to a longitudinal direction (L) of the vehicle washing installation (1), wherein an actuating drive (23) is provided for pivoting the side washing brush (7, 7') about the second pivot axis (D2), **characterized by** the following steps:
a) Detecting and/or determining the inclination of a first vehicle surface (FH) running transversely with respect to the longitudinal direction (L),
b) Pivoting the side washing brush (7, 7') out of a basic position (S) about the second pivot axis (D2) corresponding to the inclination of the first vehicle surface (FH),
c) Moving the side washing brush (7, 7') along the first vehicle surface (FH) to clean the first vehicle surface (FH),
d) Detecting the inclination of at least one second vehicle surface (FS, FS') adjoining the first vehicle surface (FH),
e) Pivoting the side washing brush (7, 7') about the first pivot axis (D1) corresponding to the inclination of the second vehicle surface (FS, FS') by means of a further actuating drive (18) if, in step c), a transition region (N, N') between the first vehicle surface (FH) and the second vehicle surface (FS, FS') is reached.

11. The method as claimed in claim 10, **characterized in that** the pivoting of the side washing brush (7, 7') about the first pivot axis (D1) is blocked during step c).

12. The method as claimed in either of claims 10 and 11, **characterized in that**, for washing the second vehicle surface (FS, FS'), the side washing brush (7, 7') is pivoted back into the basic position (S) and is blocked there against pivoting about the second pivot axis (D2).

13. The method as claimed in either of claims 10 to 12, **characterized in that** the actuating drive (23) and/or the further actuating drive (18) comprises a positioning cylinder that is adapted as pneumatic cylinder which act at least in one direction in order to position the rotation axis (A) of the side washing brush (7, 7') from the basic position (S) that is oriented vertically into an oblique position.

14. The method as claimed in any one of claims 10 to 13, **characterized in that** the vehicle washing installation (1) is designed as claimed in any one of claims 1 to 9.

## Revendications

1. Installation de lavage de véhicule (1) avec au moins une brosse de lavage latérale (7, 7'), qui est montée au moyen d'une suspension (8) sur une traverse (4) de l'installation de lavage de véhicule (1) de façon rotative autour d'un premier axe de pivotement (D1) et d'un deuxième axe de pivotement (D2) différent de celui-ci, dans laquelle la suspension (8) présente un premier servomoteur (18) pour le pivotement de la brosse de lavage latérale (7, 7') autour du premier axe de pivotement (D1) et un deuxième servomoteur (23) pour le pivotement de la brosse de lavage latérale (7, 7') autour du deuxième axe de pivotement (D2), **caractérisée en ce que** la suspension (8) présente un premier support de palier (12), qui est monté sur un deuxième support de palier (13) de façon rotative autour d'un premier des axes de pivotement (D1) et le deuxième support de palier (13) est monté sur la traverse (4) de façon rotative autour de l'autre axe de pivotement (D2).

2. Installation de lavage de véhicule (1) selon la revendication 1, **caractérisée en ce que** le premier axe de pivotement (D1) s'étend dans une direction longitudinale (L) de l'installation de lavage de véhicule (1).

3. Installation de lavage de véhicule (1) selon la revendication 1 ou 2, **caractérisée en ce que** le deuxième axe de pivotement (D2) s'étend dans une direction transversale (Q) s'étendant transversalement à la direction longitudinale (L) de l'installation de lavage de véhicule (1).

4. Installation de lavage de véhicule (1) selon l'une quelconque des revendications précédentes, **caractérisée en ce que** le premier servomoteur (18) et/ou le deuxième servomoteur (23) sont des entraînements linéaires.

5. Installation de lavage de véhicule (1) selon l'une quelconque des revendications 1 à 3, **caractérisée en ce que** le premier servomoteur (18) et/ou le deuxième servomoteur (23) sont des vérins à deux positions ou des vérins à plusieurs positions réglables, qui sont constitués par des vérins pneumatiques.

6. Installation de lavage de véhicule (1) selon l'une quelconque des revendications précédentes, **caractérisée en ce qu'**un des servomoteurs (18) agit entre le premier support de palier (12) et le deuxième support de palier (13) et l'autre servomoteur (23) agit entre le deuxième support de palier (13) et la traverse (4).

7. Installation de lavage de véhicule (1) selon l'une quelconque des revendications précédentes, **caractérisée en ce qu'**il est prévu un détecteur d'inclinaison pour la détection de l'inclinaison de la brosse de lavage latérale (7, 7') autour du premier axe de pivotement (D1) et/ou un détecteur d'inclinaison pour la détection de l'inclinaison de la brosse de lavage latérale (7, 7') autour du deuxième axe de pivotement (D2).

8. Installation de lavage de véhicule (1) selon l'une quelconque des revendications précédentes, **caractérisée en ce que** la suspension (8) est disposée sur un chariot (9) déplaçable sur une traverse (4) transversalement à une direction longitudinale (L) de l'installation de lavage de véhicule (1).

9. Installation de lavage de véhicule (1) selon l'une quelconque des revendications précédentes, **caractérisée en ce que** le premier axe de pivotement (D1) et le deuxième axe de pivotement (D2) sont essentiellement horizontaux.

10. Procédé pour faire fonctionner une installation de lavage de véhicule avec au moins une brosse de lavage latérale (7, 7'), qui est montée sur l'installation de lavage de véhicule (1) de façon rotative autour d'un premier axe de pivotement (D1) et d'un deuxième axe de pivotement (D2) différent de celui-ci et s'étendant transversalement à une direction longitudinale (L) de l'installation de lavage de véhicule (1), dans lequel il est prévu un servomoteur (23) pour faire pivoter la brosse de lavage de véhicule (7, 7') autour du deuxième axe de pivotement (D2), **caractérisé par** les étapes suivantes:
a) détecter et/ou déterminer l'inclinaison d'une première face de véhicule (FH) s'étendant transversalement à la direction longitudinale (L),
b) faire pivoter la brosse de lavage latérale (7, 7') à partir d'une position de base (S) autour du deuxième axe de pivotement (D2) de façon correspondante à l'inclinaison de la première face de véhicule (FH),
c) mouvoir la brosse de lavage latérale (7, 7') le long de la première face de véhicule (FH) pour nettoyer la première face de véhicule (FH),
d) détecter l'inclinaison d'au moins une deuxième face de véhicule (FS, FS') se raccordant à la première face de véhicule (FH),
e) faire pivoter la brosse de lavage de véhicule (7, 7') au moyen d'un autre servomoteur (18) autour du premier axe de pivotement (D1) de façon correspondante à l'inclinaison de la deuxième face de véhicule (FS, FS'), lorsque l'on atteint à l'étape c) une zone de transition (N, N') entre la première face de véhicule (FH) et la deuxième face de véhicule (FS, FS').

11. Procédé selon la revendication 10, **caractérisé en ce que** l'on bloque le pivotement de la brosse de lavage latérale (7, 7') autour du premier axe de pivotement (D1) pendant l'étape c).

12. Procédé selon une des revendications 10 ou 11, **caractérisé en ce que** l'on ramène la brosse de lavage latérale (7, 7') dans la position de base (S) pour le lavage de la deuxième face de véhicule (FS, FS') et on l'y bloque contre un pivotement autour du deuxième axe de pivotement (D2).

13. Procédé selon l'une quelconque des revendications 10 à 12, **caractérisé en ce que** le servomoteur (23) et/ou l'autre servomoteur (18) comprend un vérin de commande, qui est constitué par un vérin pneumatique, qui agit au moins dans une direction pour déplacer un axe de rotation (A) de la brosse de lavage latérale (7, 7') de la position de base (S), qui est orientée verticalement, à une position inclinée.

14. Procédé selon l'une quelconque des revendications 10 à 13, **caractérisé en ce que** l'installation de lavage de véhicule (1) est réalisée selon l'une quelconque des revendications 1 à 9.
